# EUROPEAN PATENT SPECIFICATION

(11) **EP 4 385 762 B1**
(45) Date of publication and mention of the grant of the patent: **27.08.2025**
(21) Application number: 23214516.9
(22) Date of filing: 06.12.2023
(51) Int. Cl.: B60C 11/24

(54) **SYSTEM AND METHOD FOR ESTIMATION OF TIRE TREAD DEPTH EMPLOYING WHEEL SPEED**
SYSTEM UND VERFAHREN ZUR SCHÄTZUNG DER REIFENLAUFFLÄCHENTIEFE UNTER VERWENDUNG DER RADDREHZAHL
SYSTÈME ET PROCÉDÉ D'ESTIMATION DE PROFONDEUR DE BANDE DE ROULEMENT DE PNEU À L'AIDE DE LA VITESSE DE ROUE

(30) Priority: 12.12.2022 US 202263386950 P; 28.11.2023 US 202318520766
(43) Date of publication of application: 19.06.2024
(73) Proprietor: The Goodyear Tire & Rubber Company, Akron, OH 44316 (US)
(72) Inventor: SINGH, Kanwar Bharat, L-7363 Lorentzweiler (LU); DA COSTA, Hélder Magalhães, 7740 Colmar-Berg (LU); LONGOBARDI, Armando, 54675 Körperich (DE); SAJADI ALAMDARI, Seyed Amin, 54294 Trier (DE)
(74) Representative: Kutsch, Bernd

(56) References cited:
- WO-A1-2022/144703
- US-A1- 2014 366 618
- US-A1- 2015 040 656
- US-A1- 2018 154 707
- US-A1- 2020 182 746

## Description

### Field of the Invention

The invention relates generally to tire monitoring systems and methods. More particularly, the invention relates to systems and methods that predict or estimate wear of a tire. Specifically, the invention is directed to a system and to a method for estimating the tread depth of a tire employing wheel speed signals.

### Background of the Invention

Tire wear plays an important role in vehicle factors such as safety, reliability, and performance. Tread wear, which refers to the loss of material from the tread of the tire, directly affects such vehicle factors. As a result, it is desirable to monitor and/or measure the amount of tread wear experienced by a tire, which indicates the tire wear state. The amount of tread wear is often represented by a remaining tread depth of the tire. It is to be understood that for the purpose of convenience, the terms "tread wear" and "tire wear" may be used interchangeably.

One approach to the monitoring and/or measurement of tread wear has been through the use of wear sensors disposed in the tire tread, which has been referred to as a direct method or approach. The direct approach to measuring tire wear from tire-mounted sensors has multiple challenges. Placing the sensors in an uncured or "green" tire to then be cured at high temperatures may impair the operation of the wear sensors. In addition, sensor durability can prove to be an issue in meeting the millions of cycles requirement for tires. Moreover, wear sensors in a direct measurement approach must be small enough not to cause any uniformity problems as the tire rotates at high speeds. Finally, wear sensors can be expensive and add significantly to the cost of the tire.

Due to such challenges, alternative approaches have been developed, which involve prediction of tread wear over the life of the tire, including indirect estimations of the tire wear state. These alternative approaches have experienced some disadvantages in the prior art due to a lack of optimum prediction techniques, which reduces the accuracy and/or reliability of the tread wear predictions. For example, many such techniques involve data or information that is not easily obtained, such as non-standard vehicle system signals, or data that is not accurate under all driving conditions.

In the prior art, one approach to an indirect estimation of the tire wear state has been to obtain a speed of a wheel on which the tire is mounted, which is referred to as a wheel speed signal. In this approach, the tire wear state has been determined from the wheel speed signal by correlating the wear state to a resonance frequency of the wheel speed signal. However, extraction of precise resonance frequencies from wheel speed signals may be challenging. For example, pulse width errors may be present, which are caused by manufacturing errors, wear of wheel speed sensor components, and corrosion of wheel speed sensor components. In addition, vibration disturbances from the engine and the driveline may creep into wheel speed measurements. Such challenges decrease the accuracy of the tire wear state determinations.

As a result, there is a need in the art for a system that accurately and reliably estimates the remaining tread depth on a tire.

US 2014/366618 A1 and US 2015/040656 A1 describe a system and method in accordance with the preamble of claims 1 and 14, respectively.

### Summary of the Invention

The invention relates to a system in accordance with claim 1 and to a method in accordance with claim 14.

Dependent claims refer to preferred embodiments of the invention.

According to an aspect of an exemplary embodiment of the invention, a system for estimation of a depth of a tread of a tire supporting a vehicle is provided. The system includes a processor in electronic communication with an electronic control system of the vehicle. A wheel speed signal processing module is in electronic communication with the processor, receives measured wheel speed signals, and generates processed wheel speed signals from the measured wheel speed signals. A Fast Fourier Transform computation module is in electronic communication with the processor, receives the processed wheel speed signals, and generates a Fast Fourier Transform curve. A summation module is in electronic communication with the processor, selects a predefined range of the Fast Fourier Transform curve, generates a reference curve from the predefined range of the Fast Fourier Transform curve, and determines a sum of residuals between a real-time Fast Fourier Transform curve and the reference curve. A regression model is in electronic communication with the processor and determines an estimate of tire tread depth from the sum of residuals.

### Brief Description of the Drawings

The invention will be described by way of example and with reference to the accompanying drawings, in which:
Figure 1 is a schematic perspective view of a vehicle that includes tires employing an exemplary embodiment of a system for estimation of tire tread depth of the present invention;
Figure 2 is a schematic representation of data transmission to a cloud-based server and to a device;
Figure 3 is a schematic diagram of an exemplary embodiment of a system for estimation of tire tread depth of the present invention;
Figure 4 is a graphical representation of aspects of the system for estimation of tire tread depth shown in Figure 3;
Figure 5 is a graphical representation of an additional aspect of the system for estimation of tire tread depth shown in Figure 3;
Figure 6 is a graphical representation of an additional aspect of the system for estimation of tire tread depth shown in Figure 3;
Figure 7 is a graphical representation of an additional aspect of the system for estimation of tire tread depth shown in Figure 3;
Figure 8 is a graphical representation of an additional aspect of the system for estimation of tire tread depth shown in Figure 3; and
Figure 9 is a graphical representation of an additional aspect of the system for estimation of tire tread depth shown in Figure 3.

Similar numerals refer to similar parts throughout the drawings.

### Definitions

"ANN" or "artificial neural network" is an adaptive tool for non-linear statistical data modeling that changes its structure based on external or internal information that flows through a network during a learning phase, used to model complex relationships between inputs and outputs or to find patterns in data.

"Axial" and "axially" means lines or directions that are parallel to the axis of rotation of the tire.

"CAN bus" or "CAN bus system" is an abbreviation for controller area network system, which is a vehicle bus standard designed to allow microcontrollers and devices to communicate with each other within a vehicle without a host computer.

"Circumferential" means lines or directions extending along the perimeter of the surface of the annular tread perpendicular to the axial direction.

"Equatorial centerplane" means the plane perpendicular to the tire's axis of rotation and passing through the center of the tread.

"Footprint" means the contact patch or area of contact created by the tire tread with a flat surface as the tire rotates or rolls.

"Groove" is a continuous channel molded or cut into the tread.

"Inboard side" means the side of the tire nearest the vehicle when the tire is mounted on a wheel and the wheel is mounted on the vehicle.

"Lateral" means an axial direction.

"Outboard side" means the side of the tire farthest away from the vehicle when the tire is mounted on a wheel and the wheel is mounted on the vehicle.

"Radial" and "radially" means directions radially toward or away from the axis of rotation of the tire.

"Rib" means a circumferentially extending strip of rubber on the tread which is defined by at least one circumferential groove and either a second such groove or a lateral edge, the strip being laterally undivided by full-depth grooves.

"Tread" is the portion of the tire that comes into contact with the road.

"Tread depth" is the radial distance measured from the tread surface to the bottom of the grooves.

"Tread element" or "traction element" means a rib or a block element defined by a shape having adjacent grooves.

### Detailed Description of Preferred Embodiments of the Invention

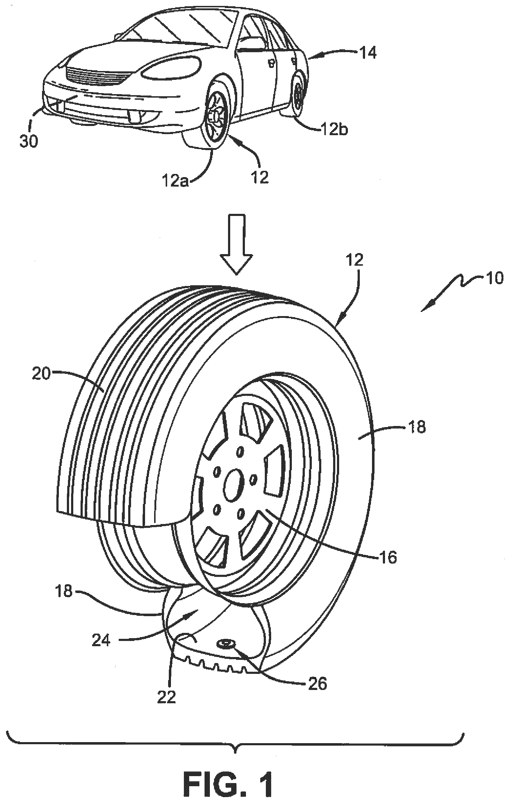

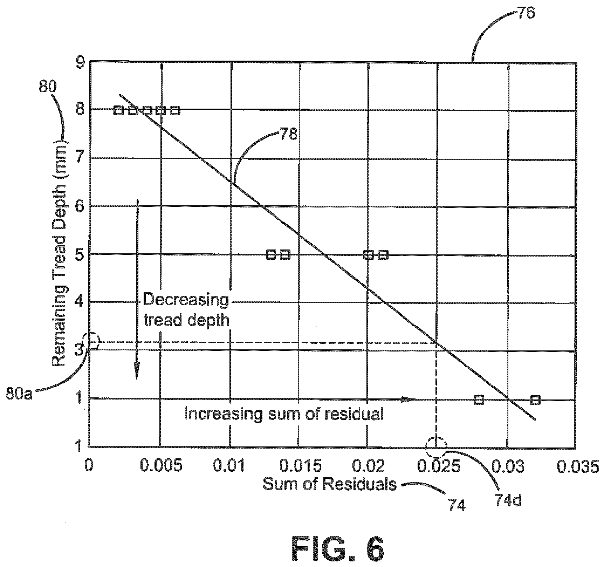

With reference to Figures 1 through 9, an exemplary embodiment of the system 10 for estimation of tire tread depth of the present invention is presented. With particular reference to Figure 1, the system 10 estimates a tread depth 80 (Figure 6) of each tire 12 supporting a vehicle 14. When the tires 12 are disposed in a front position on the vehicle 14, they are referred to as front tires 12a. When the tires 12 are disposed in a rear position on the vehicle 14, they are referred to as rear tires 12b. While the vehicle 14 is depicted as a passenger car, the invention is not to be so restricted. The principles of the invention find application in other vehicle categories, such as commercial trucks, in which vehicles may be supported by more or fewer tires than those shown in Figure 1.

The tires 12 are of conventional construction, and each tire is mounted on a respective wheel 16 as known to those skilled in the art. Each tire 12 includes a pair of sidewalls 18 that extend to a circumferential tread 20, which wears with age from road abrasion. A measure of the wear on the tire 12 is the remaining tread depth 80. An innerliner 22 is disposed on the inner surface of the tire 12, and when the tire is mounted on the wheel 16, an internal cavity 24 is formed, which is filled with a pressurized fluid, such as air.

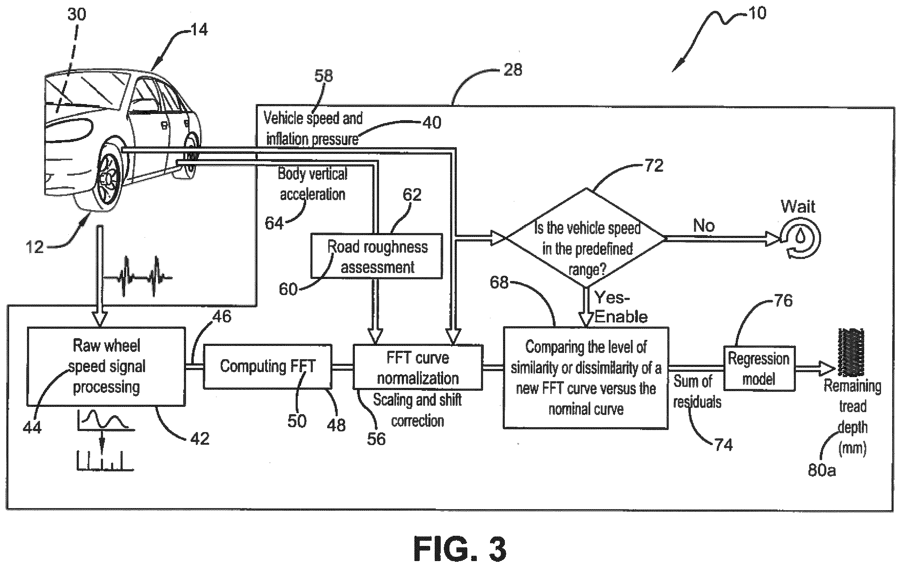

A tire sensor unit 26 may be attached to the innerliner 22 of each tire 12 by means such as an adhesive, and measures certain parameters or conditions of the tire, such as tire pressure 40 (Figure 3) and/or tire temperature, and may be of any known configuration. It is to be understood that the tire sensor unit 26 may be attached in such a manner, or to other components of the tire 12, such as on or in one of the sidewalls 18, on or in the tread 20, and/or on the wheel 16. The tire sensor unit 26 preferably also includes electronic memory capacity for storing identification (ID) information for each tire 12, known as tire ID information.

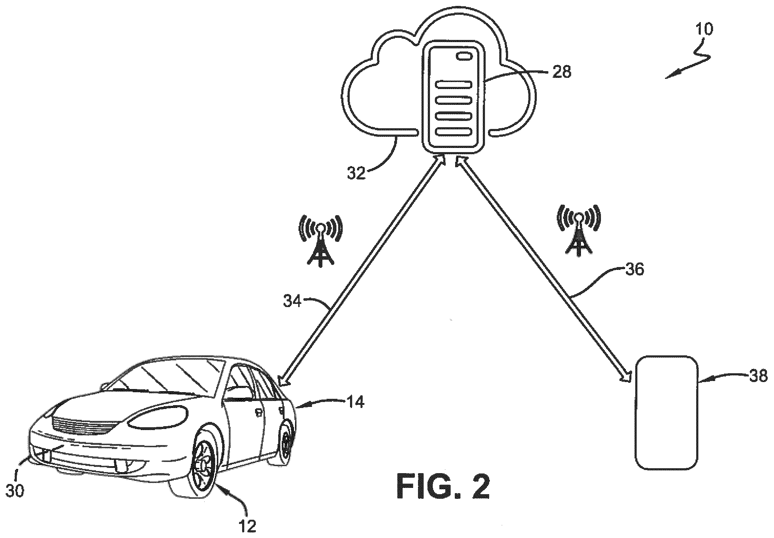

Turning to Figure 2, aspects of the system for estimation of tire tread depth 10 preferably are executed on a processor 28. The processor 28 enables input of parameters and execution of specific techniques, to be described below, which are stored in a suitable storage medium and are in electronic communication with the processor. The processor 28 may be mounted on the vehicle 14, may be in communication with an electronic control system 30 of the vehicle, such as the vehicle CAN bus system, and/or may be a remote processor in a cloud-based server 32.

Wireless transmission means 34, such as an antenna, may wirelessly send data from sensors that are in electronic communication with the vehicle electronic control system 30 to the processor 28. Output from the system 10 may be wirelessly transmitted by an antenna 36 from the processor 28 to a display or controller device 38 and/or to the electronic control system 30 of the vehicle 14. By way of example, the device 38 may include a device that is accessible to a user of the vehicle 14 or a technician for the vehicle, such as a smartphone, and/or a device that is accessible to a fleet manager, such as a computer.

Turning to Figure 3, the system for estimation of tire tread depth 10 includes a wheel speed signal processing module 42, which is stored on or is in electronic communication with the processor 28. The wheel speed signal processing module 42 receives a raw measured wheel speed signal 44 from an electronic control system 30 of the vehicle 14, such as the vehicle CAN bus. The wheel speed signal processing module 42 preferably compiles data sets according to timestamps, which are digital identifications of each time at which a measured wheel speed signal 44 is transmitted to the wheel speed signal processing module. The wheel speed signal processing module 42 generates processed wheel speed signals 46.

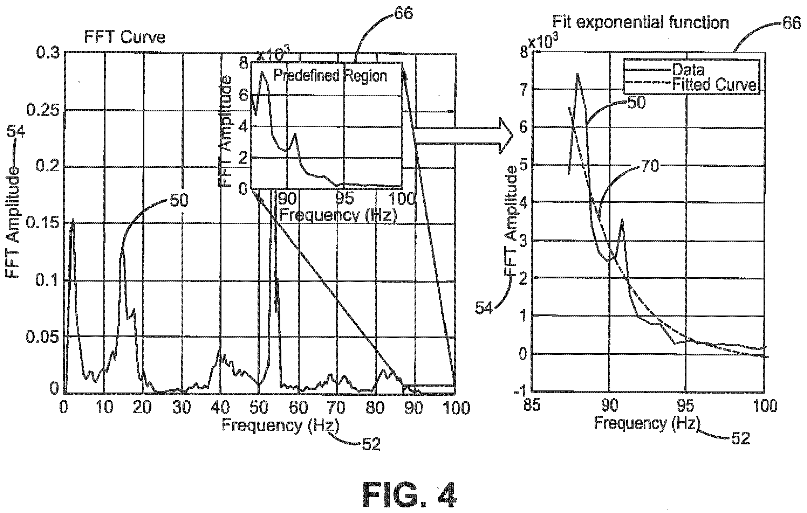

The processed wheel speed signals 46 are communicated or transmitted from the wheel speed signal processing module 42 to a Fast Fourier Transform computation module 48, which is stored on or is in electronic communication with the processor 28. With additional reference to Figure 4, the Fast Fourier Transform computation module 48 generates a Fast Fourier Transform curve 50, which is a plot of frequency 52 of the processed wheel speed signals 46 versus a Fast Fourier Transform amplitude 54 of the processed wheel speed signals. To generate the Fast Fourier Transform curve 50, the Fast Fourier Transform computation module 48 converts the processed wheel speed signals 46 from their original time domain to a representation in the frequency domain.

Returning to Figure 3, once the Fast Fourier Transform computation module 48 generates the Fast Fourier Transform curve 50, a normalization module 56 may optionally normalize the Fast Fourier Transform curve. The normalization module 56 is stored on or is in electronic communication with the processor 28 and accounts for impacts by certain factors upon the Fast Fourier Transform amplitude 54. By way of example, the factors may include the tire inflation pressure 40, a speed 58 of the vehicle 14, and a roughness 60 of the road over which the vehicle travels. The normalization module 56 executes scaling and shift correction to adjust the values of the Fast Fourier Transform amplitude 54 to a common scale to account for these factors.

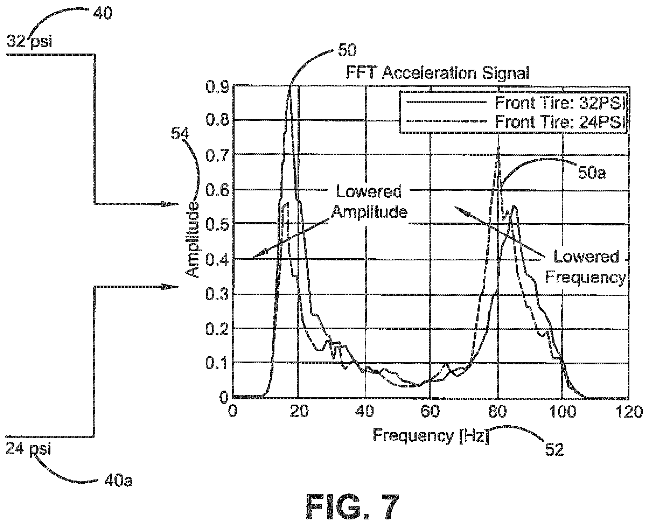

With additional reference to Figure 7, the impact of a change in tire pressure 40 on the Fast Fourier Transform curve 50 is shown. A lower pressure 40a on the front tires 12a results in a Fast Fourier Transform curve 50a with lower wheel hop acceleration levels for the front tires than for the rear tires 12b. The values of the Fast Fourier Transform amplitude 54 are normalized by inputting the inflation pressure 40 from the tire sensor unit 26, which enables adjustment of the amplitude to a common pressure scale.

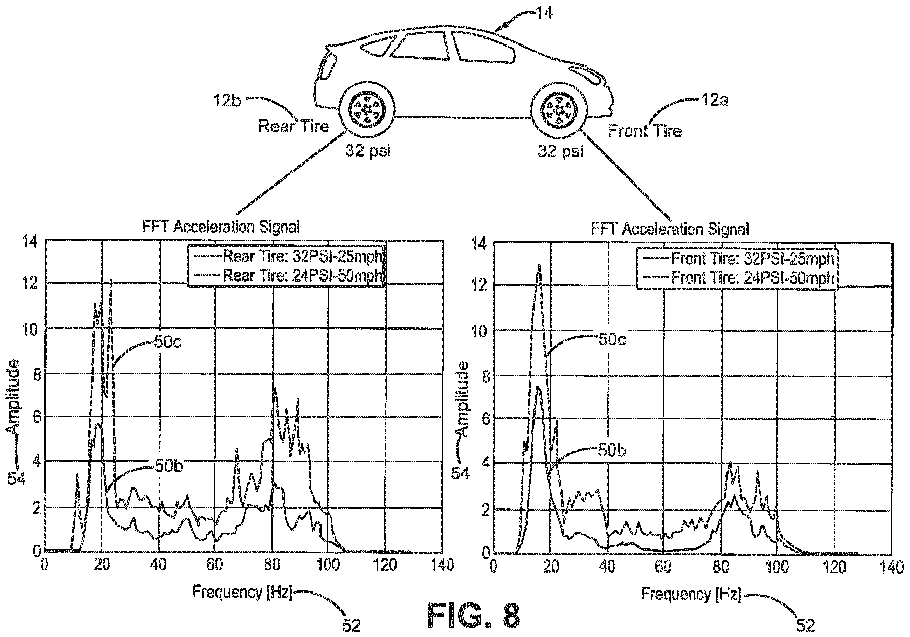

Referring now to Figures 3 and 8, the impact of the speed 58 of the vehicle 14 on the Fast Fourier Transform curve 50 is shown. Because acceleration amplitudes scale linearly with speed, as the speed 58 of the vehicle 14 increases, the amplitude of the Fast Fourier Transform curve increases from a first level 50b to a second level 50c. The values of the Fast Fourier Transform amplitude 54 are normalized by employing the vehicle speed 58 from an electronic control system 30 of the vehicle 14, such as the vehicle CAN bus. Use of the vehicle speed 58 thus enables the Fast Fourier Transform amplitudes 54 to be scaled according to speed.

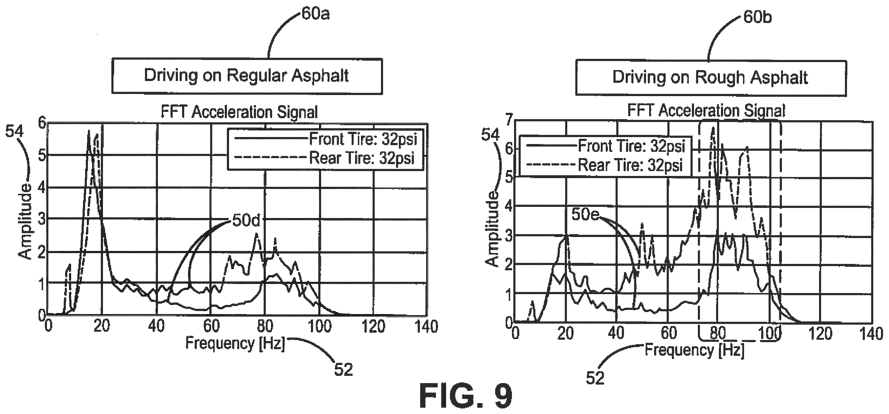

The impact of the roughness 60 of the road on the Fast Fourier Transform curve 50 is shown in Figures 3 and 9. When the vehicle 14 travels over road with a low roughness 60a, the amplitude of the Fast Fourier Transform curve is at a first level 50d. When the vehicle 14 travels over a road with a high roughness 60b, the amplitude of the Fast Fourier Transform curve increases to a second level 50e. The results reflect a large contribution of higher frequencies of the amplitude of the Fast Fourier Transform curve at the second level 50e due to a high road roughness 60b, indicating that the tire dynamics are of greater relevance on rough roads.

To normalize the values of the Fast Fourier Transform amplitude 54, a vertical acceleration 64 of the vehicle 14 is employed, which may be measured by an accelerometer. Vertical acceleration data 64 from the accelerometer may be communicated to the processor 28 from a telematics control unit in which the accelerometer is mounted, or from an electronic control system 30, such as the vehicle CAN bus system. The vertical acceleration 64 is input into a roughness assessment module 62, which is stored on or is in electronic communication with the processor 28 and correlates the vertical acceleration to the road roughness 60. For example, the roughness assessment module 62 may include pre-determined values of road roughness 60, which may be indicated by an international roughness index (IRI), and are correlated to certain values of vertical acceleration 64.

The values of the Fast Fourier Transform amplitude 54 are normalized by employing the road roughness 60 as determined by the roughness assessment module 62. Use of the road roughness 60 thus enables the Fast Fourier Transform amplitudes 54 to be scaled according to road roughness.

Returning to Figures 3 and 4, after any optional normalization of the Fast Fourier Transform curve 50 by the normalization module 56, a predefined region or range 66 of the curve is selected in a summation module 68. The summation module 68 is stored on or is in electronic communication with the processor 28. Preferably, the predefined range 66 is determined based on domain knowledge of the Fast Fourier Transform curve 50. For example, the predefined range 66 may be the portion of the Fast Fourier Transform curve 50 between eighty (80) Hertz (Hz) and one hundred (100) Hz, as there may be an expected shift in the torsional mode of the tire 12 in this frequency range.

Optionally, an evaluator 72, which is stored on or is in electronic communication with the processor 28, may receive the above-described vehicle speed 58. To ensure an optimum predefined range 66 is selected by the summation module 68, the evaluator 72 may evaluate the measured vehicle speed 58 to determine if the vehicle speed is in a predetermined acceptable range. If the vehicle speed 58 is in the predetermined range, operation of the summation module 68 is enabled. If the vehicle speed 58 is outside of the predetermined range, operation of the summation module 68 is suspended.

As shown in Figure 4, once the predefined range 66 is selected, the summation module 68 generates a fitted reference curve 70. To generate the reference curve 70, the summation module 68 preferably fits a polynomial or an exponential function to the Fast Fourier Transform curve 50 in the predefined range 66 for a nominal or reference condition. Because the system for estimation of tire tread depth 10 concerns wear of the tire 12, the nominal or reference condition preferably is for a new tire, which is when the tread 20 is unworn and the tread depth 80 is at a known or maximum value.

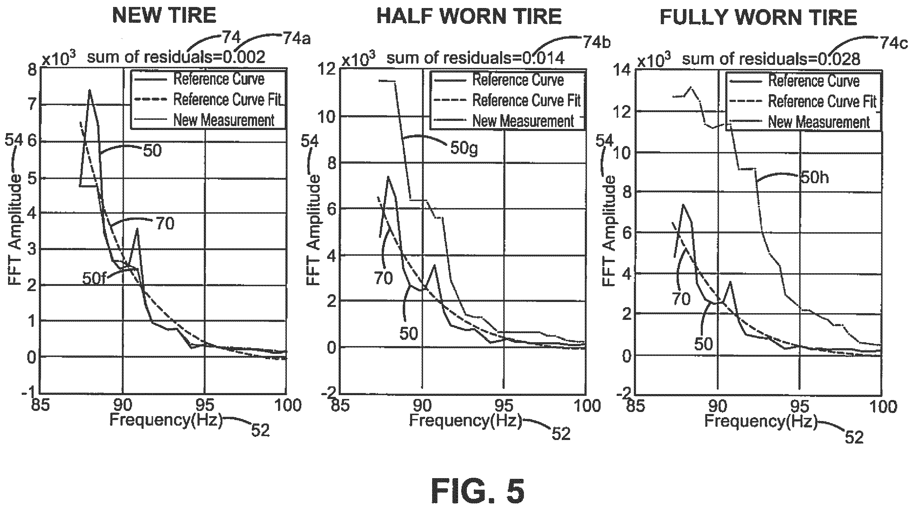

With reference to Figures 3 and 5, once the fitted reference curve 70 is generated by the summation module 68, a real-time Fast Fourier Transform curve 50f, 50g, 50h is generated in the same manner as described above for the Fast Fourier Transform curve 50. The summation module 68 compares the level of similarity of the predefined range 66 of the real-time Fast Fourier Transform curve 50f, 50g, 50h to the fitted reference curve 70 by determining a sum of residuals 74. The sum of residuals 74 is a measure of a discrepancy between variable data, which is the real-time Fast Fourier Transform curve 50f, 50g, 50h, and a model, which is the reference curve 70. A small value for the sum of residuals 74 indicates a tight fit of the variable data to the model. For example, a first real-time Fast Fourier Transform curve 50f yields a small sum of residuals 74a when the tire 12 is new. When the tire 12 is half worn, a second real-time Fast Fourier Transform curve 50g yields a larger sum of residuals 74b. When the tire 12 is fully worn, a third real-time Fast Fourier Transform curve 50g yields an even larger sum of residuals 74c.

Turning now to Figures 3 and 6, the sum of residuals 74 is employed in a regression model 76, which is stored on or is in electronic communication with the processor 28. The regression model 76 preferably employs linear regression to generate a linear relationship 78 between the sum of residuals 74 as the input variable and the remaining tread depth 80 as the response variable. In the linear relationship 78, as the sum of residuals 74 increases, the remaining tread depth 80 decreases. Thus, when the real-time Fast Fourier Transform curve 50f, 50g, 50h is used to determine a specific value 74d of the sum of residuals 74, the linear relationship 78 enables the regression model 68 to determine a specific value 80a for the remaining tire tread depth 80.

The value 80a of the remaining tire tread depth 80 may be wirelessly transmitted from the processor 28 to the display or controller device 38 and/or to the electronic control system 30 of the vehicle 14. The device 38 may include a device that is accessible to a user of the vehicle 14 or a technician for the vehicle, such as a smartphone, and/or a device that is accessible to a fleet manager, such as a computer. In this manner, the estimate of remaining tread depth 80a may be employed by various control systems that are in communication with the electronic control system 30 of the vehicle 14, by a user of the vehicle, by a technician, and/or by a fleet manager.

In this manner, the system for estimation of tire tread depth 10 accurately and reliably estimates the tread depth 80a that remains on a tire 12. The system 10 may execute an estimation of tread depth 80a for the front tires 12a and a separate estimation of tread depth for the rear tires 12b. Instead of extracting and comparing a particular resonance frequency, the system 10 estimates tread depth 80 using wheel speed signals 44 to generate a Fast Fourier Transform curve 50. The system 10 further employs a sum of residuals 74 between the real-time Fast Fourier Transform curve 50f, 50g, 50h and a reference curve 70 to generate a specific value 80a of remaining tread depth 80 on the tire 12. The system 10 is repeatable and may be employed across a wide variety of tires.

The present invention also includes a method for estimating the depth 80 of the tread 20 remaining on a tire 12. The method includes steps in accordance with the description that is presented above and shown in Figures 1 through 9.

It is to be understood that the structure of the above-described the system for estimation of tire tread depth may be altered or rearranged, or components or steps known to those skilled in the art omitted or added, without affecting the overall concept or operation of the invention. For example, electronic communication may be through a wired connection or wireless communication without affecting the overall concept or operation of the invention. Such wireless communications include radio frequency (RF) and Bluetooth^{®} communications.

## Claims

1. A system for estimation of a depth of a tread (20) of a tire (12) supporting a vehicle (14), the system (10) comprising:
a processor (28) in electronic communication with an electronic control system (30) of the vehicle (14);
a wheel speed signal processing module (42) in electronic communication with the processor (28), the wheel speed signal processing module being configured for receiving measured wheel speed signals and for generating processed wheel speed signals (46) from the measured wheel speed signals;
a Fast Fourier Transform computation module (48) in electronic communication with the processor (28), the Fast Fourier Transform computation module being configured for receiving the processed wheel speed signals (46) and for generating a Fast Fourier Transform curve (50);
**characterized in that** the system (10) further comprises:
a summation module (68) in electronic communication with the processor (28), the summation module being configured for selecting a predefined range of the Fast Fourier Transform curve (50), for generating a reference curve (70) from the predefined range of the Fast Fourier Transform curve, and for determining a sum of residuals (74) between a real-time Fast Fourier Transform curve (50f, 50g, 50h) and the reference curve (70); and
a regression model (76) in electronic communication with the processor (28), the regression model being configured for determining an estimate of tire tread depth (80) from the sum of residuals (74).

2. The system of claim 1, wherein the wheel speed signal processing module (42) is configured for receiving the wheel speed signal from an electronic control system (30) of the vehicle (14).

3. The system of claim 1 or 2, wherein the Fast Fourier Transform curve (50f, 50g, 50h) includes a plot of frequency (52) of the processed wheel speed signals (46) versus a Fast Fourier Transform amplitude (54) of the processed wheel speed signals (46).

4. The system of at least one of the previous claims, further comprising a normalization module (56) in electronic communication with the processor (28), the normalization module being configured for accounting for impacts upon the Fast Fourier Transform amplitude (54) and normalizing the Fast Fourier Transform curve (50).

5. The system of at least one of the previous claims, wherein the normalization module (56) is configured to (i) normalize values of the Fast Fourier Transform amplitude (54) to account for an impact from tire inflation pressure (40) by employing a tire inflation pressure (40) from a tire sensor unit (26); and/or wherein the normalization module (56) is configured to (ii) adjust values of the Fast Fourier Transform amplitude (54) to a common pressure scale; and/or wherein the normalization module (56) is configured to (iii) normalize values of the Fast Fourier Transform amplitude (54) to account for an impact from a speed of the vehicle (14) by employing a vehicle speed measurement.

6. The system of at least one of the previous claims, wherein the normalization module (56) is configured to (i) scale values of the Fast Fourier Transform amplitude (54) according to the speed of the vehicle (14); and/or wherein the normalization module (56) is configured to (ii) normalize values of the Fast Fourier Transform amplitude (54) to account for an impact from a roughness of a road over which the vehicle (14) travels; and/or wherein the normalization module (56) is configured to (iii) scale values of the Fast Fourier Transform amplitude (54) according to road roughness.

7. The system of at least one of the previous claims, further comprising a roughness assessment module (62) in electronic communication with the processor (28), the roughness assessment module (62) being configured for receiving a vehicle vertical acceleration and for correlating the vertical acceleration to the road roughness, the vehicle vertical acceleration preferably being measured by an accelerometer.

8. The system of at least one of the previous claims, wherein the roughness assessment module (62) includes pre-determined values of road roughness correlated to values of vertical acceleration; and/or wherein the summation module (68) is configured to determine the predefined range of the Fast Fourier Transform curve (50) based on domain knowledge.

9. The system of at least one of the previous claims, further comprising an evaluator (72), the evaluator (72) being configured for receiving a vehicle speed and for determining whether the vehicle speed is in a predetermined acceptable range, the evaluator (72) thereby enabling operation of the summation module (68) when the vehicle speed is in the predetermined acceptable range.

10. The system of at least one of the previous claims, wherein the summation module (68) is configured to fit at least one of a polynomial function and an exponential function to the Fast Fourier Transform curve (50) in the predefined range to generate the reference curve (70).

11. The system of at least one of the previous claims, wherein the reference curve (70) is based upon a reference condition for a new tire (12).

12. The system of at least one of the previous claims, wherein the regression model (68) is configured to employ a linear regression to generate a linear relationship between the sum of residuals and tread depth (80).

13. The system of at least one of the previous claims, wherein the estimate of tire tread depth (80) is transmitted from the processor (28) to at least one of a display device, a controller device (38), and an electronic control system (30) of the vehicle (14); and/or wherein the processor (28) is at least one of a vehicle-mounted processor and a remote processor.

14. A method of estimation of a depth of a tread (20) of a tire (12) supporting a vehicle (14), the method comprising:
providing a processor (28) in electronic communication with an electronic control system (30) of the vehicle (14);
providing a wheel speed signal processing module (42) in electronic communication with the processor (28), the wheel speed signal processing module receiving measured wheel speed signals and generating processed wheel speed signals (46) from the measured wheel speed signals; and
providing a Fast Fourier Transform computation module (48) in electronic communication with the processor (28), the Fast Fourier Transform computation module receiving the processed wheel speed signals and generating a Fast Fourier Transform curve (50);
**characterized in that** the method further comprises:
providing a summation module (68) in electronic communication with the processor (28), the summation module (68) selecting a predefined range of the Fast Fourier Transform curve (50), generating a reference curve (70) from the predefined range of the Fast Fourier Transform curve (50), and determining a sum of residuals (74) between a real-time Fast Fourier Transform curve (50f, 50g, 50h) and the reference curve (70); and
providing a regression model (76) in electronic communication with the processor (28), the regression model determining an estimate of tire tread depth (80) from the sum of residuals (74).

15. The method of claim 14 wherein the method is executed using a system (10) in accordance with at least one of the claims 1 to 13.

## Patentansprüche

1. System zum Schätzen der Profiltiefe einer Lauffläche (20) eines Luftreifens (12), der ein Fahrzeug (14) trägt, wobei das System (10) Folgendes umfasst:
einen Prozessor (28), der elektronisch mit einem elektronischen Steuersystem (30) des Fahrzeugs (14) verbunden ist;
ein Verarbeitungsmodul (42) eines Radgeschwindigkeitssignals, das elektronisch mit dem Prozessor (28) verbunden ist; wobei das Verarbeitungsmodul (42) eines Radgeschwindigkeitssignals so ausgebildet ist, dass es Signale der gemessenen Radgeschwindigkeit empfängt und aus den Signalen der gemessenen Radgeschwindigkeit verarbeitete Signale (46) der Radgeschwindigkeit erzeugt;
ein Modul (48) zur Berechnung einer schnellen Fourier-Transformation, das elektronisch mit dem Prozessor (28) verbunden ist; wobei das Modul (48) zur Berechnung einer schnellen Fourier-Transformation so ausgebildet ist, dass es die verarbeiteten Signale (46) der Radgeschwindigkeit empfängt und eine Kurve (50) der schnellen Fourier-Transformation erzeugt;
**dadurch gekennzeichnet, dass** das System (10) ferner Folgendes umfasst:
ein Additionsmodul (68), das elektronisch mit dem Prozessor (28) verbunden ist; wobei das Additionsmodul so ausgebildet ist, dass es einen vordefinierten Bereich der Kurve (50) der schnellen Fourier-Transformation auswählt, dass es eine Referenzkurve (70) aus dem vordefinierten Bereich der Kurve (50) der schnellen Fourier-Transformation erzeugt, und dass es eine Summe von Restwerten (74) zwischen einer Echtzeitkurve der schnellen Fourier-Transformation (50f, 50g, 50h) und der Referenzkurve (70) bestimmt; und
ein Regressionsmodell (76), das elektronisch mit dem Prozessor (28) verbunden ist; wobei das Regressionsmodell so ausgebildet ist, dass es eine Schätzung der Profiltiefe (80) der Lauffläche aus der Summe der Restwerte (74) bestimmt.

2. System nach Anspruch 1, wobei das Verarbeitungsmodul (42) eines Radgeschwindigkeitssignals so ausgebildet ist, dass es das Radgeschwindigkeitssignal von einem elektronischen Steuersystem (30) des Fahrzeugs (14) empfängt.

3. System nach Anspruch 1 oder 2, wobei die Kurve der schnellen Fourier-Transformation (50f, 50g, 50h) eine Frequenzkurve (52) der Radgeschwindigkeitssignale (46) umfasst, die in Bezug auf eine Amplitude (54) der schnellen Fourier-Transformation der verarbeiteten Radgeschwindigkeitssignale (46) verarbeitet wurden.

4. System nach mindestens einem der vorhergehenden Ansprüche, das ferner ein Normalisierungsmodul (56) umfasst, das elektronisch mit dem Prozessor (28) verbunden ist, wobei das Normalisierungsmodul so ausgebildet ist, dass es Auswirkungen auf die Amplitude (54) der schnellen Fourier-Transformation berücksichtigt und die Kurve der schnellen Fourier-Transformation (50) normalisiert.

5. System nach mindestens einem der vorstehenden Ansprüche, wobei das Normalisierungsmodul (56) so ausgebildet ist, (i) dass es Werte der Amplitude der schnellen Fourier-Transformation (54) normalisiert, zu dem Zweck der Berücksichtigung eines Einflusses aufgrund des Reifendrucks (40) unter Verwendung eines von einer Reifendetektionseinheit (26) gelieferten Reifendrucks (40); und/oder wobei das Normalisierungsmodul (56) so ausgebildet ist, (ii) dass es Werte der Amplitude der schnellen Fourier-Transformation (54) in Bezug auf eine gemeinsame Druckskala anpasst; und/oder wobei das Normalisierungsmodul (56) so ausgebildet ist, (iii) dass es Werte der Amplitude der schnellen Fourier-Transformation (54) normalisiert, zu dem Zweck der Berücksichtigung eines Einflusses aufgrund einer Geschwindigkeit des Fahrzeugs (14) unter Verwendung einer Messung der Fahrzeuggeschwindigkeit.

6. System nach mindestens einem der vorhergehenden Ansprüche, wobei das Normalisierungsmodul (56) so ausgebildet ist, (i) dass es Werte der Amplitude der schnellen Fourier-Transformation (54) in Abhängigkeit von der Geschwindigkeit des Fahrzeugs (14) skaliert; und/oder wobei das Normalisierungsmodul (56) so ausgebildet ist, (ii) dass es Werte der Amplitude der schnellen Fourier-Transformation (54) normalisiert, zu dem Zweck der Berücksichtigung eines Einflusses einer Unebenheit einer Straße, auf der sich das Fahrzeug (14) bewegt; und/oder das Normalisierungsmodul (56) so ausgebildet ist, (iii) dass es Werte der Amplitude der schnellen Fourier-Transformation (54) in Abhängigkeit von der Unebenheit der Straße skaliert.

7. System nach mindestens einem der vorstehenden Ansprüche, das ferner ein Rauheitsbewertungsmodul (62) umfasst, das elektronisch mit dem Prozessor (28) verbunden ist; wobei das Rauheitsbewertungsmodul (62) so ausgebildet ist, dass es eine vertikale Beschleunigung des Fahrzeugs empfängt und die vertikale Beschleunigung mit der Straßenrauheit korreliert; wobei die vertikale Beschleunigung des Fahrzeugs vorzugsweise mittels eines Beschleunigungsmessers gemessen wird.

8. System nach mindestens einem der vorhergehenden Ansprüche, wobei das Modul (62) zur Bewertung der Unebenheit vorbestimmte Werte der Unebenheit der Straße umfasst, die mit Werten der vertikalen Beschleunigung korreliert sind; und/oder wobei das Additionsmodul (68) so ausgebildet ist, dass es den vorbestimmten Bereich der Kurve der schnellen Fourier-Transformation (50) auf der Grundlage von Fachwissen bestimmt.

9. System nach mindestens einem der vorhergehenden Ansprüche, das zusätzlich eine Auswertevorrichtung (72) umfasst, wobei die Auswertevorrichtung (72) so ausgebildet ist, dass sie eine Fahrzeuggeschwindigkeit empfängt und bestimmt, ob die Fahrzeuggeschwindigkeit in einem vorbestimmten akzeptablen Bereich liegt, wobei die Auswertevorrichtung (72) die Aktivierung des Additionsmoduls (68) auslöst, wenn die Fahrzeuggeschwindigkeit in dem vorbestimmten akzeptablen Bereich liegt.

10. System nach mindestens einem der vorhergehenden Ansprüche, wobei das Additionsmodul (68) so ausgebildet ist, dass es mindestens eine Funktion, die aus einer Polynomfunktion und einer Exponentialfunktion ausgewählt ist, an die Kurve der schnellen Fourier-Transformation (50) in dem vordefinierten Bereich anpasst, um die Referenzkurve (70) zu erzeugen.

11. System nach mindestens einem der vorhergehenden Ansprüche, wobei die Referenzkurve (70) auf einer Referenzbedingung für einen neuen Luftreifen (12) basiert.

12. System nach mindestens einem der vorhergehenden Ansprüche, wobei das Regressionsmodell (68) so ausgebildet ist, dass es eine lineare Regression verwendet, zu dem Zweck, eine lineare Beziehung zwischen der Summe der Restwerte und der Profiltiefe (80) der Lauffläche zu erzeugen.

13. System nach mindestens einem der vorhergehenden Ansprüche, wobei die Schätzung der Profiltiefe (80) der Lauffläche des Luftreifens vom Prozessor (28) an mindestens ein Element übertragen wird, das aus einer Anzeigeeinrichtung, einer Steuereinrichtung (38) und einem elektronischen Steuersystem (30) des Fahrzeugs (14) ausgewählt ist; und/oder wobei der Prozessor (28) mindestens einen Prozessor darstellt, der aus einem am Fahrzeug angebrachten Prozessor und einem entfernt angeordneten Prozessor ausgewählt ist.

14. Verfahren zum Schätzen der Profiltiefe einer Lauffläche (20) eines Luftreifens (12), der ein Fahrzeug (14) trägt, wobei das Verfahren Folgendes umfasst:
das Bereitstellen eines Prozessors (28), der elektronisch mit einem elektronischen Steuersystem (30) des Fahrzeugs (14) verbunden ist;
das Bereitstellen eines Verarbeitungsmoduls (42) eines Radgeschwindigkeitssignals, das elektronisch mit dem Prozessor (28) verbunden ist; wobei das Verarbeitungsmodul (42) eines Radgeschwindigkeitssignals so ausgebildet ist, dass es Signale der gemessenen Radgeschwindigkeit empfängt und aus den Signalen der gemessenen Radgeschwindigkeit verarbeitete Signale (46) der Radgeschwindigkeit erzeugt; und
das Bereitstellen eines Moduls (48) zur Berechnung einer schnellen Fourier-Transformation, das elektronisch mit dem Prozessor (28) verbunden ist; wobei das Modul (48) zur Berechnung einer schnellen Fourier-Transformation so ausgebildet ist, dass es die verarbeiteten Signale (46) der Radgeschwindigkeit empfängt und eine Kurve (50) der schnellen Fourier-Transformation erzeugt;
**dadurch gekennzeichnet, dass** das Verfahren ferner Folgendes umfasst:
das Bereitstellen eines Additionsmoduls (68), das elektronisch mit dem Prozessor (28) verbunden ist; wobei das Additionsmodul so ausgebildet ist, dass es einen vordefinierten Bereich der Kurve (50) der schnellen Fourier-Transformation auswählt, dass es eine Referenzkurve (70) aus dem vordefinierten Bereich der Kurve (50) der schnellen Fourier-Transformation erzeugt, und dass es eine Summe von Restwerten (74) zwischen einer Echtzeitkurve der schnellen Fourier-Transformation (50f, 50g, 50h) und der Referenzkurve (70) bestimmt; und
das Bereitstellen eines Regressionsmodells (76), das elektronisch mit dem Prozessor (28) verbunden ist; wobei das Regressionsmodell so ausgebildet ist, dass es eine Schätzung der Profiltiefe (80) der Lauffläche aus der Summe der Restwerte (74) bestimmt.

15. Verfahren nach Anspruch 14, wobei das Verfahren unter Verwendung eines Systems (10) gemäß mindestens einem der Ansprüche 1 bis 13 durchgeführt wird.

## Revendications

1. Système destiné à estimer une profondeur de sculpture d'une bande de roulement (20) d'un bandage pneumatique (12) qui supporte un véhicule (14) ; dans lequel le système (10) comprend :
un processeur (28) qui est mis en communication par voie électronique avec un système de commande électronique (30) du véhicule (14) ;
un module de traitement (42) d'un signal de la vitesse d'une roue, qui est mis en communication par voie électronique avec le processeur (28) ; dans lequel le module de traitement (42) d'un signal de la vitesse d'une roue est configuré pour recevoir des signaux de la vitesse d'une roue qui a été mesurée et pour générer des signaux (46) de la vitesse de roues qui ont été traités à partir des signaux de la vitesse de roue qui a été mesurée ;
un module de calcul (48) d'une transformée de Fourier rapide qui est mis en communication par voie électronique avec le processeur (28) ; dans lequel le module de calcul (48) d'une transformée de Fourier rapide est configuré pour recevoir les signaux (46) de la vitesse de roues qui ont été traités et pour générer une courbe (50) de la transformée de Fourier rapide ;
**caractérisé en ce que** le système (10) comprend en outre :
un module d'addition (68) qui est mis en communication par voie électronique avec le processeur (28) ; dans lequel le module d'addition est configuré pour sélectionner une plage prédéfinie de la courbe (50) de la transformée de Fourier rapide, pour générer une courbe de référence (70) à partir de la plage prédéfinie de la courbe (50) de la transformée de Fourier rapide, et pour déterminer une somme de résidus (74) entre une courbe en temps réel de la transformée de Fourier rapide (50f, 50g, 50h) et la courbe de référence (70) ; et
un modèle de régression (76) qui est mis en communication par voie électronique avec le processeur (28) ; dans lequel le modèle de régression est configuré pour déterminer une estimation de la profondeur de sculpture (80) de la bande de roulement à partir de la somme des résidus (74).

2. Système selon la revendication 1, dans lequel le module de traitement (42) d'un signal de la vitesse d'une roue est configuré pour recevoir le signal de la vitesse d'une roue à partir d'un système de commande électronique (30) du véhicule (14).

3. Système selon la revendication 1 ou 2, dans lequel la courbe de la transformée de Fourier rapide (50f, 50g, 50h) englobe un tracé de fréquence (52) des signaux de vitesse de roue (46) qui ont été traités par rapport à une amplitude (54) de la transformée de Fourier rapide des signaux de vitesse de roue (46) qui ont été traités.

4. Système selon au moins une des revendications précédentes, qui comprend en outre un module de normalisation (56) qui est mis en communication par voie électronique avec le processeur (28) ; dans lequel le module de normalisation est configuré pour prendre en compte des impacts sur l'amplitude (54) de la transformée de Fourier rapide et pour normaliser la courbe de la transformée de Fourier rapide (50).

5. Système selon au moins une des revendications précédentes, dans lequel le module de normalisation (56) est configuré pour (i) normaliser des valeurs de l'amplitude de la transformée de Fourier rapide (54) dans le but de prendre en compte un impact dû à la pression de gonflage de bandage pneumatique (40) en utilisant une pression de gonflage du bandage pneumatique (40) fournie par une unité de détection du bandage pneumatique (26) ; et/ou dans lequel le module de normalisation (56) est configuré pour (ii) ajuster des valeurs de l'amplitude de la transformée de Fourier rapide (54) par rapport à une échelle de pression commune ; et/ou dans lequel le module de normalisation (56) est configuré pour (iii) normaliser des valeurs de l'amplitude de la transformée de Fourier rapide (54) dans le but de prendre en compte un impact dû à une vitesse du véhicule (14) en utilisant une mesure de la vitesse du véhicule.

6. Système selon au moins une des revendications précédentes, dans lequel le module de normalisation (56) est configuré pour (i) une mise à l'échelle de valeurs de l'amplitude de la transformée de Fourier rapide (54) en fonction de la vitesse du véhicule (14) ; et/ou dans lequel le module de normalisation (56) est configuré pour (ii) normaliser des valeurs de l'amplitude de la transformée de Fourier rapide (54) afin de prendre en compte un impact dû à une rugosité d'une route sur laquelle se déplace le véhicule (14) ; et/ou le module de normalisation (56) est configuré pour (i) une mise à l'échelle de valeurs de l'amplitude de la transformée de Fourier rapide (54) en fonction de la rugosité de la route.

7. Système selon au moins une des revendications précédentes, qui comprend en outre un module (62) d'évaluation de la rugosité qui est mis en communication par voie électronique avec le processeur (28) ; dans lequel le module (62) d'évaluation de la rugosité est configuré pour recevoir une accélération verticale du véhicule et pour mettre en corrélation l'accélération verticale et la rugosité de la route ; dans lequel l'accélération verticale du véhicule est de préférence mesurée par l'intermédiaire d'un accéléromètre.

8. Système selon au moins une des revendications précédentes, dans lequel le module (62) d'évaluation de la rugosité englobe des valeurs prédéterminées de rugosité de la route qui sont mises en corrélation avec des valeurs de l'accélération verticale ; et/ou dans lequel le module d'addition (68) est configuré pour déterminer la plage prédéterminée de la courbe de la transformée de Fourier rapide (50) en se basant sur les connaissances du domaine.

9. Système selon au moins une des revendications précédentes, qui comprend en outre un dispositif d'évaluation (72) ; dans lequel le dispositif d'évaluation (72) est configuré pour recevoir une vitesse du véhicule et pour déterminer le fait de savoir si la vitesse du véhicule se trouve dans une plage acceptable prédéterminée; dans lequel le dispositif d'évaluation (72) déclenche la mise en service du module d'addition (68) lorsque la vitesse du véhicule se trouve dans la plage acceptable prédéterminée.

10. Système selon au moins une des revendications précédentes, dans lequel le module d'addition (68) est configuré pour ajuster au moins une fonction qui est choisie parmi une fonction polynomiale et une fonction exponentielle à la courbe de la transformée de Fourier rapide (50) dans la plage prédéfinie afin de générer la courbe de référence (70).

11. Système selon au moins une des revendications précédentes, dans lequel la courbe de référence (70) se base sur un condition de référence pour un bandage pneumatique nouveau (12).

12. Système selon au moins une des revendications précédentes, dans lequel le modèle de régression (68) est configuré pour utiliser une régression linéaire dans le but de générer une relation linéaire entre la somme des résidus et la profondeur de sculpture (80) de la bande de roulement.

13. Système selon au moins une des revendications précédentes, dans lequel l'estimation de la profondeur de sculpture (80) de la bande de roulement du bandage pneumatique est transmise à partir du processeur (28) à au moins un élément qui est choisi parmi un dispositif d'affichage, un dispositif de commande (38) et un système de commande électronique (30) du véhicule (14) ; et/ou dans lequel le processeur (28) représente au moins un processeur qui est choisi parmi un processeur monté à bord du véhicule et un processeur situé à distance.

14. Procédé d'estimation d'une sculpture de bande de roulement (20) d'un bandage pneumatique (12) qui supporte un véhicule (14), le procédé comprenant le fait de :
procurer un processeur (28) qui est mis en communication par voie électronique avec un système de commande électronique (30) du véhicule (14) ;
procurer un module de traitement (42) d'un signal de la vitesse d'une roue, qui est mis en communication par voie électronique avec le processeur (28) ; dans lequel le module de traitement (42) d'un signal de la vitesse d'une roue est configuré pour recevoir des signaux de la vitesse d'une roue qui a été mesurée et pour générer des signaux (46) de la vitesse de roues qui ont été traités à partir des signaux de la vitesse de roue qui a été mesurée ; et
procurer un module de calcul (48) d'une transformée de Fourier rapide qui est mis en communication par voie électronique avec le processeur (28) ; dans lequel le module de calcul (48) d'une transformée de Fourier rapide est configuré pour recevoir les signaux (46) de la vitesse de roues qui ont été traités et pour générer une courbe (50) de la transformée de Fourier rapide ;
**caractérisé en ce que** le procédé comprend en outre le fait de :
procurer un module d'addition (68) qui est mis en communication par voie électronique avec le processeur (28) ; dans lequel le module d'addition est configuré pour sélectionner une plage prédéfinie de la courbe (50) de la transformée de Fourier rapide, pour générer une courbe de référence (70) à partir de la plage prédéfinie de la courbe (50) de la transformée de Fourier rapide, et pour déterminer une somme de résidus (74) entre une courbe en temps réel de la transformée de Fourier rapide (50f, 50g, 50h) et la courbe de référence (70) ; et
procurer un modèle de régression (76) qui est mis en communication par voie électronique avec le processeur (28) ; dans lequel le modèle de régression est configuré pour déterminer une estimation de la profondeur de sculpture (80) de la bande de roulement à partir de la somme des résidus (74).

15. Procédé selon la revendication 14, dans lequel le procédé est mis en œuvre en utilisant un système (10) en conformité avec au moins une des revendications 1 à 13.
